# EUROPÄISCHE PATENTSCHRIFT

(11) **EP 1 254 426 B1**
(45) Veröffentlichungstag und Bekanntmachung des Hinweises auf die Patenterteilung: **13.02.2008**
(21) Anmeldenummer: 00991119.9
(22) Anmeldetag: 22.12.2000
(51) Int. Cl.: G06K 17/00

(54) **VERFAHREN ZUR SENDUNGSVERFOLGUNG**
METHOD FOR TRACKING POSTAL ITEMS
PROCEDE DE SUIVI D'ENVOIS

(30) Priorität: 11.02.2000 DE 10006242
(43) Veröffentlichungstag der Anmeldung: 06.11.2002
(73) Patentinhaber: SIEMENS AKTIENGESELLSCHAFT, 80333 München (DE)
(72) Erfinder: LINDNER, Joachim, 78462 Konstanz (DE); HOFFMANN, Klaus, 78465 Konstanz (DE)
(86) Internationale Anmeldenummer: PCT/DE2000/004644
(87) Internationale Veröffentlichungsnummer: WO 2001/059697

(56) Entgegenhaltungen:
- EP-A- 0 748 083
- WO-A-96/13015
- WO-A-99/38136
- US-A- 5 455 409

## Beschreibung

Die Erfindung betrifft ein Verfahren zur Sendungsverfolgung, bei dem der Versandablauf jeder Sendung in einem abfragbaren Datensatz, der im Verlauf des Versandprozesses aktualisiert wird, gespeichert ist.

Um sicherzustellen, daß der Versand der Sendungen, wie Briefe, Pakete u.ä., gleichmäßig in hoher Qualität durchgeführt wird, ist es notwendig zu ermitteln, zu welchen Zeiten sich eine Sendung wo während des Versandablaufes befindet. Bei wertvollen Sendungen wünschen auch die Kunden (Absender oder Empfänger) häufig aktuelle Informationen, wann die Sendung die jeweiligen Zwischenstationen erreicht hat.

Nach dem Stand der Technik sind zwei Varianten bekannt. Bei der ersten Variante werden die Datensätze zentral gesammelt und aktualisiert. Dies erfordert teure "High End" Computer mit hohem Datendurchsatz. Sind die Datenmengen sehr hoch, so ist ein solches System technisch nur sehr aufwendig realisierbar. Das Dokument WO 96/13015 zeigt ein derartiges System.

Bei der zweiten Variante werden die abfragbaren Datensätze parallel zum Sendungsstrom elektronisch versendet und in Computern der jeweiligen Verteilzentren gespeichert, verändert und ergänzt. Das Auffinden der Informationen kann hierbei sehr lange dauern, da das komplette Netzwerk abgesucht werden muß.

Der im Anspruch 1 angegebenen Erfindung liegt daher die Aufgabe zugrunde, die Sendungen im Versandprozeß unter Vermeidung teurer "High End" Computer ohne erheblichen Suchaufwand zu verfolgen.

Erfindungsgemäß wird im Ursprungsverteilzentrum jede aufgegebene Sendung mit einer Kennung versehen, die sie eindeutig kennzeichnet. Weiterhin wird im Ursprungsverteilzentrum zu jeder aufgegebenen Sendung ein veränderbarer und ergänzbarer Datensatz angelegt, der eine Referenznummer, sowie die Sendung und den Versandablauf charakterisierende Daten enthält. Dieser Datensatz wird mindestens für die Dauer des Versandablaufes gespeichert. Danach erfolgt der Transport der Sendungen gemäß der ermittelten Zieladressen zu den Zielverteilzentren, ggf. über ein oder mehrere weitere Verteilzentren.

In jedem Verteilzentrum, zu dem die jeweilige Sendung transportiert wurde, wird dann die Referenznummer und das Ursprungsverteilzentrum ermittelt. Anschließend werden jeweils die aktuellen, den Versandablauf charakterisierenden Daten mit der entsprechenden Referenznummer an die Ursprungsverteilzentren zur Ergänzung und/oder Veränderung des der jeweiligen Referenznummer zugeordneten Datensatzes elektronisch übermittelt.

Damit ergibt sich eine dezentrale Lösung ohne notwendige "High End" Computer für hohes Datenaufkommen. Die Informationen über den Versandablauf der Sendungen sind stets an einem bekannten Punkt, dem jeweiligen Ursprungsverteilzentrum verfügbar, d.h. es wird eine hohe Geschwindigkeit bei der Datensuche zur Sendungsverfolgung erreicht. Die Datensätze werden während ihrer Laufzeit komplettiert, so daß sich auf dem elektronischen Netz stets nur ein relativ geringes Datenvolumen durch das Versenden von Informationsscheiben befindet.

Vorteilhaft ist es, wenn die Kennung die Referenznummer enthält. Damit ist es dann möglich, in den nachfolgenden Verteilzentren durch Lesen der Kennung die Referenznummer der jeweiligen Sendung zu ermitteln. Darüberhinaus ist es vorteilhaft, wenn die Kennung eine Kennzeichnung des Ursprungsverteilzentrums enthält, so daß dieses in den nachfolgenden Verteilzentren einfach ermittelt werden kann. Diese Kennzeichnung kann mittels vereinbarter Wertebereiche der Referenznummern realisiert werden.

In einer anderen vorteilhaften Ausgestaltung werden aus den Verteilzentren zusätzlich dort ermittelte, die Sendungen charakterisierende Daten unter der zugehörigen Referenznummer an das jeweilige Ursprungsverteilzentrum elektronisch übertragen. Dies ist z.B. vorteilhaft, wenn im Ursprungsverteilzentrum ein effektives Wiegen der Sendungen nicht möglich ist, in einem der nachfolgenden Verteilzentren entsprechende Wiegeeinrichtungen aber vorhanden sind.

Bei einer weiteren vorteilhaften Ausgestaltung werden an die jeweils nachfolgenden Verteilzentren, an die die Sendungen verteilt werden, elektronische Vorinformationen über zu erwartende Sendungen übermittelt, die die Referenznummern und die Kennungen der zu erwartenden Sendungen, sowie vorteilhaft auch die Sendungen charakterisierende Daten, enthalten. Dadurch ist es möglich, in den nachfolgenden Verteilzentren entsprechende Kapazitäten bereitzustellen.

Um das Lesen der Kennungen der Sendungen bei Versand über Ländergrenzen, bei dem die Kennungen oft ihre Gültigkeit verlieren, hinaus zu erleichtern, ist es vorteilhaft, die Kennung kodiert und unkodiert aufzubringen. Zuerst wird dann versucht, die kodierte Kennung automatisch zu lesen. Ist dies dann nicht möglich, wird die unkodierte Kennung gelesen.

Vorteilhaft ist es auch, bei Überschreiten der Gültigkeitsgrenzen der Kennungen die Sendungen mit neuen gültigen Kennungen zu versehen, z.B. durch Überkleben der ungültigen Kennungen.

Sind die Kennungen nicht lesbar, weil sie z.B. ungültig sind, oder enthalten die Kennungen keine Referenznummern, und wurden an die nachfolgenden Verteilzentren elektronische Vorinformationen mit die zu erwartenden Sendungen charakterisierenden Daten übersandt, können die Referenznummern der Sendungen vorteilhafterweise durch Detektion der Charakteristika der Sendungen und Durchsuchen der elektronischen Vorinformationen mit den Referenznummern nach den detektierten charakteristischen Daten ermittelt werden.

Wurden keine Vorinformationen übertragen, so kann die Referenznummer anhand der ermittelten Sendungscharakteristika in den Datensätzen des Ursprungsverteilzentrums gesucht werden. Das Ursprungsverteilzentrum kann hierbei über die Absenderadresse ermittelt werden.

Vorteilhaft ist es auch, beim Versand von Collisendungen in den Datensatz jeder Sendung des Collis auch die Referenznummern der benachbarten Sendungen mit Kennzeichnung der letzten Sendung des Collis aufzunehmen. Dadurch vermeidet man variable Längen in den Datensätzen.

Bei einer weiteren vorteilhaften Ausgestaltung wird an der Sendung eine Radio-Frequenz-Identifizierungs-Marke zur Kennung angebracht.

Anschließend wird die Erfindung in einem Ausführungsbeispiel anhand der Zeichnung veranschaulicht.
Dabei zeigen
- FIG 1: eine schematische Darstellung des Sendungs- und Informationsflusses im Versandprozeß
- FIG 2: eine schematische Darstellung des Verfahrensablaufes

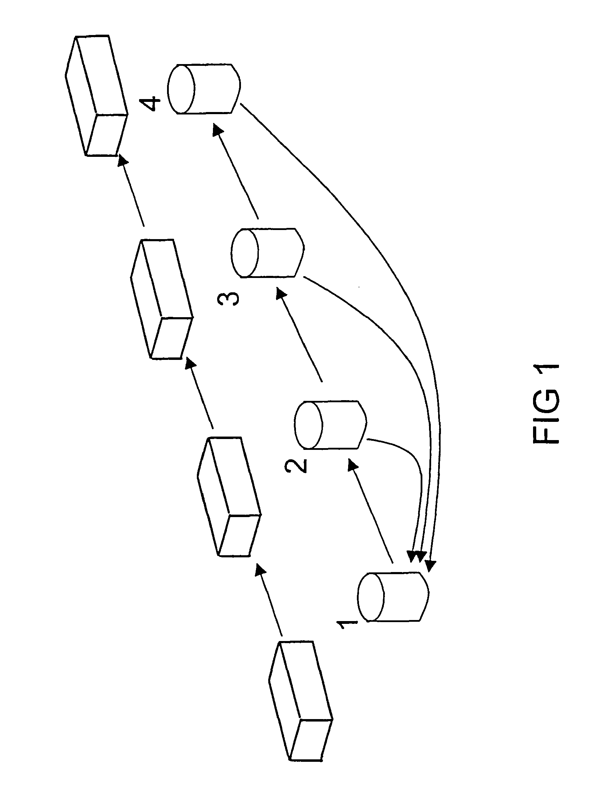

Wie in FIG 1 dargestellt, wird ein Paket als Sendung S vom Ursprungsverteilzentrum, bei dem es aufgegeben wird, über zwei weitere Verteilzentren zum Zielverteilzentrum, von dem es zum Empfänger gelangt, transportiert.

In jedem Verteilzentrum befindet sich dezentral ein Computer, in dem für die dort aufgegebenen Sendungen Daten zum Versandablauf und über die Sendungscharakteristika als Datensatz gespeichert werden.

Wie schematisch dargestellt, werden in den Computern 1-3 der einzelnen Verteilzentren gespeicherte Informationen über die weiterzutransportierenden Sendungen an den Computer des jeweiligen die Sendungen empfangenden Verteilzentrums als Vorinformationen elektronisch übertragen (angedeutet durch den vorwärtsgerichteten Pfeil). Die im Computer 1 des Ursprungsverteilzentrums angelegten Datensätze zu jeder dort aufgegebenen Sendung enthalten einen globalen Teil mit z.B. folgenden Angaben:
- Referenznummer
- Ursprungsverteilzentrum
- Absenderadresse
- Empfängeradresse
- Absender-Email-Adresse
- Abmessungen, Volumen, Gewicht
- Anzahl der jeweiligen Collisendungen mit Verzeigerung
- Wertangabe
- Routinginformationen
- Sollzeiten
und daran anzuhängende Informationsscheiben können sein:
- Kennung als ID-/Barcode (mit Kennzeichnung des Ursprungsverteilzentrums)
- Durchgangsverteilzentrum
- Zielverteilzentrum
- Sendungsannahme durch Empfänger
- jeweils dazugehörige Datums- und Zeitangaben

Selbstverständlich können die Datensätze auch andere oder weitere Angaben enthalten, wie z.B. den Transportablauf näher beschreibende Daten (wann befand sich die Sendung in welchem Transportmittel).

Die Vorinformationen enthalten mindestens die Kennungen und die Referenznummern der zu erwartenden Sendungen.

In diesem Beispiel sind Empfängeradresse und Abmessungen / Gewicht ebenfalls Bestandteil der Vorinformationen.

Die in den einzelnen Verteilzentren erhaltenen Informationen über den Versandablauf werden an das Ursprungsverteilzentrum zurückgemeldet und vervollständigen und aktualisieren die Datensätze im Computer 1 zu den jeweiligen empfangenen Sendungen (angedeutet durch die rückwärts gerichteten Pfeile).

Die Versandprozesse können dabei auch über die Ländergrenzen hinweg ablaufen. So kann ein Paket aus dem Lande A mit dem Ursprungsverteilzentrum über ein weiteres Verteilzentrum in diesem Land, zwei Verteilzentren im Lande B und ein Verteilzentrum im Lande C zum Zielverteilzentrum in diesem Lande transportiert werden.

Im Land A wird eine landesspezifische Kennung (Barcode) aufgebracht, die entsprechend verfolgt wird. Im Ursprungsverteilzentrum wird ein Datensatz mit einer Referenznummer angelegt und die landesspezifische Kennung angehangen. Zyklisch werden aufbereitete Vorinformationen mit der Referenznummer an die nachfolgenden Verteilzentren übermittelt. Dabei sendet das letzte Verteilzentrum des jeweiligen Landes die Vorinformation an das erste Verteilzentrum des folgenden Landes.

Von Land zu Land muß das Problem gelöst werden, daß das Folgeland die Kennung des Vorgängerlandes u.U. nicht lesen kann. Wenn dies so ist, muß im Land A eine zusätzliche Kennung aufgebracht werden, die im Land B verstanden wird (neue gültige Kennung) oder im Land B müssen die Scannerfunktionen angepasst werden (Vergrößerung des Gültigkeitsbereiches) oder mit der im Land B vorhandenen Information (z.B. Ziel-/Absenderadresse, Datum, Barcodebild...) wird versucht, den zugehörigen Datensatz im Land A zu finden. Ziel aller Bemühungen ist es, daß die Informationen von Land B dem Datensatz mit der Referenznummer im Land A zugewiesen werden können.

Aus dem Land B werden die aktuellen Versandinformationen mit der jeweiligen Referenznummer aus der erhaltenen Vorinformation zurück an das Ursprungsverteilzentrum im Land A gesandt. Eventuell ermittelte zusätzliche Informationen z.B. über das Gewicht, das im Land A wegen fehlender Waagen nicht ermittelt werden kann, komplettieren den globalen Datensatz. Im Land B wird die Zuordnung der landesspezifischen Kennung zur Referenznummer über die Lebenszeit der Referenznummer gespeichert, um eine im Land B gestartete Sendungsverfolgung zu ermöglichen. Zyklisch werden auch aus dem Land B aufbereitete Vorinformationen an die betroffenen Länder gesendet. In ähnlicher Art und Weise gibt Land C seine Informationen an Land A weiter.

Die landesspezifische Sendungsverfolgung kann auch nachgeschickt oder erst bei Bedarf angefragt werden.

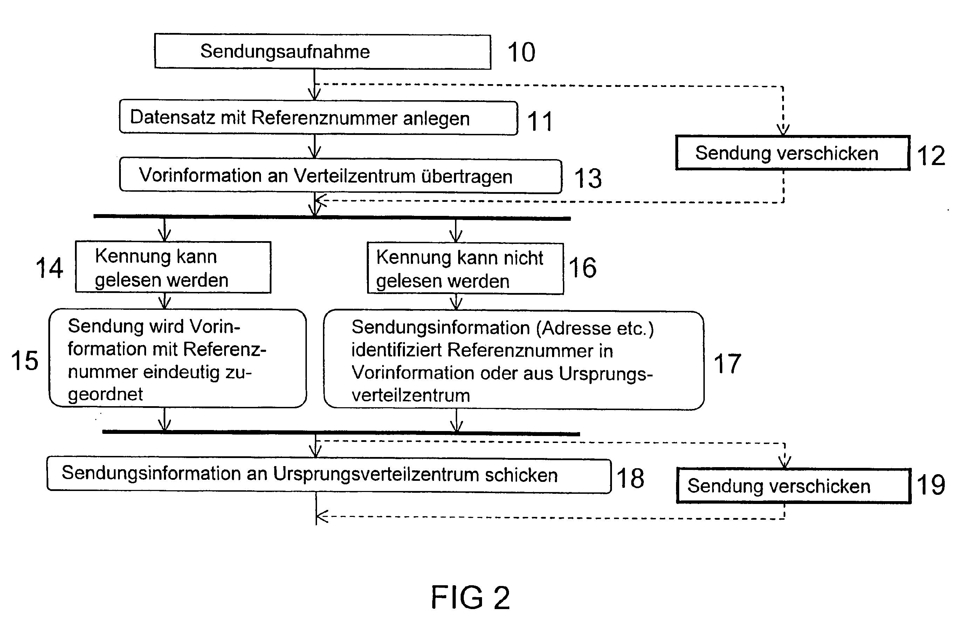

Nach dem in FIG 2 dargestellten Verfahrensablauf wird zuerst im Ursprungsverteilzentrum die aufgegebene Sendung erstmals bearbeitet 10. Dabei wird sie vereinzelt, die Sendungsoberfläche wird abgescannt, die Empfängeradresse wird mindestens teilweise gelesen, so daß die Sendung sortiert und in Richtung Zielort versandt werden kann, und eine Kennung wird auf der Sendungsoberfläche aufgebracht, die eine Referenznummer beinhaltet. Dies erleichtert die spätere Ermittlung der Referenznummer, ist aber nicht unbedingt notwendig. Dann wird zu jeder Sendung ein Datensatz mit dem schon geschilderten Inhalt mit der Referenznummer angelegt 11 und die Sendung wird an das nächste Verteilzentrum auf dem Wege zum Empfänger verschickt 12. Weiterhin wird auf dieses Verteilzentrum eine Vorinformation über die zu erwartenden Sendungen mit Angabe der Referenznummer, der Kennung der Empfängeradresse und Sendungseigenschaften, wie Abmessungen, Gewicht übertragen 13.

An dem jeweiligen, die übersandten Sendungen empfangenden Verteilzentrum wird dann versucht, die Kennung zu lesen. Dies erfolgt beispielsweise mit einem Barcodeleser. Kann die Kennung gelesen werden 14, so wird die Sendung der Vorinformation mit der Referenznummer eindeutig zugeordnet 15 und die aktuellen, den Versandablauf charakterisierenden Daten werden in das Ursprungsverteilzentrum elektronisch übermittelt 18, und die Sendung wird nach entsprechenden Sortiervorgängen an das nächste Verteilzentrum verschickt 19. War es nicht möglich, die Kennung zu lesen 16, weder eine kodierte noch eine unkodierte Kennung, so erfolgt die Zuordnung der Sendung einer Referenznummer durch Suchen detektierter Charakteristika (z.B. Adressen) in der Vorinformation mit Referenznummern 17.

Die Kennungen können aufgedruckt werden und / oder als kodierte Radio-Frequenz-Identifizierungsmarken an der Sendung aufgebracht werden, die dann mit an sich bekannter Lesetechnik ausgelesen werden.

Collisendungen, d.h. Sendungen, die gemeinsam in einem Colli transportiert werden, werden im Ursprungsverteilzentrum erfaßt und im Datensatz als solche gekennzeichnet. Der Datensatz der ersten Sendung des Collis enthält dazu die Referenznummer der zweiten Sendung, der Datensatz der zweiten Sendung die Referenznummern der ersten und der dritten Sendung, der Datensatz der dritten Sendung die Referenznummern der zweiten und der vierten Sendung usw. Der Datensatz der letzten Sendung erhält eine Kennzeichnung als "letzte Sendung". Jede Sendung gibt Aufschluß über die benachbarten Sendungen des Collis, damit sind auch alle Sendungen des Collis identifizierbar. So werden also variable Längen der Datensätze für ein Colli vermieden.

Die Erläuterungen in diesem Ausführungsbeispiel bedeuten keine Einschränkung der Erfindung. So ist es z.B. selbstverständlich möglich, das Verfahren auch ohne die Übersendung von Vorinformationen durchzuführen. Dann muß bei Nichtlesen der Kennung die Referenznummer durch Durchsuchen der Datensätze des Ursprungsverteilzentrums nach detektierten Sendungscharakteristika ermittelt werden, wobei das Ursprungsverteilzentrum anhand der Absenderadresse festgestellt wird.

## Patentansprüche

1. Verfahren zur Sendungsverfolgung, bei dem der Versandablauf jeder Sendung in einem abfragbaren Datensatz gespeichert wird mit folgenden Schritten:
- Versehen jeder aufgegebenen Sendung im Ursprungsverteilzentrum mit einer Kennung, die die jeweilige Sendung eindeutig kennzeichnet,
- Anlegen eines veränderbaren und ergänzbaren Datensatzes zu jeder aufgegebenen Sendung im Ursprungsverteilzentrum, der eine Referenznummer sowie die Sendung und den Versandablauf charakterisierende Daten enthält, mindestens für die Dauer des Versandablaufes,
- Transport der Sendungen gemäß der ermittelten Zieladressen zu den Zielverteilzentren, ggf. über ein oder mehrere weitere Verteilzentren,
- Ermittlung der Referenznummer und des Ursprungsverteilzentrums in jedem Verteilzentrum, zu dem die jeweilige Sendung transportiert wurde,
- elektronische Übermittlung der jeweils aktuellen, den Versandablauf charakterisierenden Daten mit der Referenznummer für jede Sendung aus den Verteilzentren im Verlaufe des Verteilprozesses an das Ursprungsverteilzentrum und Ergänzung und / oder Veränderung des der jeweiligen Referenznummer zugeordneten Datensatzes.

2. Verfahren nach Anspruch 1, wobei die Kennung die Referenznummer enthält.

3. Verfahren nach Anspruch 1 oder 2, wobei die Kennung eine Kennzeichnung des Ursprungsverteilzentrums enthält.

4. Verfahren nach Anspruch 1, wobei aus den Verteilzentren zusätzlich dort ermittelte, die Sendungen charakterisierende Daten unter der zugehörigen Referenznummer an das jeweilige Ursprungsverteilzentrum elektronisch übertragen werden.

5. Verfahren nach Anspruch 1, wobei aus den Verteilzentren an die jeweils nachfolgenden Verteilzentren, an die die Sendungen verteilt werden, elektronische Vorinformationen über zu erwartende Sendungen übermittelt werden, die mindestens die Referenznummer und die Kennungen der zu erwartenden Sendungen enthalten.

6. Verfahren nach Anspruch 5, wobei die Vorabinformationen zusätzlich die Sendungen charakterisierende Daten, wie u.a. Empfängeradressen, enthalten.

7. Verfahren nach Anspruch 4, wobei die Referenznummern der Sendungen in den weiteren oder Zielverteilzentren aus den gelesenen Kennungen ermittelt werden.

8. Verfahren nach einem der Ansprüche 1 bis 3, wobei die Kennung kodiert und unkodiert auf die Sendungen aufgebracht wird, zuerst die kodierte Kennung gelesen wird und, wenn diese nicht entzifferbar ist, die unkodierte Kennnung gelesen wird.

9. Verfahren nach einem der Ansprüche 1 bis 3, wobei bei Überschreitung der Gültigkeitsbereiche der Kennungen die Sendungen mit neuen gültigen Kennungen versehen werden.

10. Verfahren nach Anspruch 1, wobei die Referenznummern der Sendungen in den weiteren oder Zielverteilzentren durch Detektion der Charakteristika der Sendungen und Durchsuchen der Datensätze des Ursprungsverteilzentrums mit den Referenznummern nach den detektierten Daten ermittelt werden.

11. Verfahren nach Anspruch 6, wobei die Referenznummern der Sendungen in den weiteren oder Zielverteilzentren durch Detektion der Charakteristika der Sendungen und Durchsuchen der elektronischen Vorinformationen mit den Referenznummern nach den detektierten charakteristischen Daten ermittelt werden.

12. Verfahren nach einem der Ansprüche 1-11, wobei für Collisendungen, bei denen mehrere Sendungen gemeinsam an eine bestimmte Zieladresse transportiert werden, der Datensatz jeder Sendung des Collis auch die Referenznummern der benachbarten Sendungen enthält, wobei der Datensatz der letzten Sendungen als solcher **gekennzeichnet** ist.

13. Verfahren nach Anspruch 1, wobei zur Kennung der Sendung eine Radio-Frequenz-Identifizierungs-Marke an der Sendung angebracht ist.

## Claims

1. Method for tracking postal items, in which the shipping sequence of each postal item is stored in a data record that can be interrogated, having the following steps:
- providing each postal item posted in the original distribution center with an identification key which identifies the respective postal item uniquely,
- creating a data record which can be changed and supplemented for each postal item posted in the original distribution center, said data record containing a reference number and data that characterizes the postal item and the shipping sequence, at least for the duration of the shipping sequence,
- transporting the postal items in accordance with the determined destination addresses to the destination distribution centers, possibly via one or more further distribution centers,
- determining the reference number and the original distribution center in each distribution center to which the respective postal item has been transported,
- electronically transmitting the respective current data characterizing the shipping sequence with the reference number for each postal item from the distribution centers in the course of the distribution process to the original distribution center and supplementing and/or changing the data record associated with the respective reference number.

2. Method according to claim 1, the identification key containing the reference number.

3. Method according to claim 1 or 2, the identification key containing an identifier relating to the original distribution center.

4. Method according to claim 1, data from the distribution centers, additionally determined there and characterizing postal items, being transmitted electronically under the associated reference number to the respective original distribution center.

5. Method according to claim 1, prior electronic information about postal items to be expected being transmitted from distribution centers to the respective succeeding distribution centers, to which the postal items are distributed, said prior information containing at least the reference number and the identification keys of the postal items to be expected.

6. Method according to claim 5, the prior information additionally containing data that characterizes the postal items, such as, inter alia, recipient addresses.

7. Method according to claim 4, the reference numbers of the postal items being determined in the further or destination distribution centers from the identification keys read.

8. Method according to one of claims 1 to 3, the identification key being applied to the postal items in encoded and unencoded form, the encoded identification key being read first and, if it cannot be deciphered, the unencoded identification key being read.

9. Method according to one of claims 1 to 3, the postal items being provided with new valid identification keys if the validity ranges of the identification keys are exceeded.

10. Method according to claim 1, the reference numbers of the postal items being determined in the further or destination distribution centers by detection of the characteristics of the postal items and searching through the data records of the original distribution center with the reference numbers in accordance with the detected data.

11. Method according to claim 6, the reference numbers of the postal items being determined in the further or destination distribution centers by detection of the characteristics of the postal items and searching through the prior electronic information with the reference numbers in accordance with the detected characteristic data.

12. Method according to one of claims 1-11, where, for Collico® postal items, in which a plurality of postal items are transported jointly to a specific destination address, the data record of each postal item in the Collico® also contains the reference numbers of the adjacent postal items, the data record of the last postal items being identified as such.

13. Method according to claim 1, a radio frequency identification mark being applied to the postal item in order to identify the postal item.

## Revendications

1. Procédé de suivi d'envois postaux, dans lequel le déroulement de l'expédition de chaque envoi postal est mémorisé dans un ensemble de données interrogeable, ledit procédé comportant des étapes suivantes consistant à :
- doter, au centre de distribution d'origine, chaque envoi postal expédié d'un identificateur qui caractérise sans ambiguïté l'envoi postal respectif,
- appliquer à chaque envoi postal expédié, au centre de distribution d'origine, un ensemble de données, pouvant être modifié et complété, qui contient un numéro de référence ainsi que des données caractérisant l'envoi postal et le déroulement de l'expédition, au moins pendant la durée de l'expédition,
- transporter les envois postaux, en fonction des adresses de destination déterminées, aux centres de distribution de destination, le cas échéant via un ou plusieurs autres centres de distribution,
- déterminer le numéro de référence et le centre de distribution d'origine dans chaque centre de distribution auquel l'envoi postal respectif a été transporté,
- transmettre par des moyens électroniques les données actuelles caractérisant le déroulement de l'expédition avec le numéro de référence de chaque envoi postal des centres de distribution, dans le processus de distribution, au centre de distribution d'origine et compléter et/ou modifier l'ensemble de données associé à chaque numéro de référence respectif.

2. Procédé selon la revendication 1, dans lequel l'identificateur contient le numéro de référence.

3. Procédé selon la revendication 1 ou 2, dans lequel l'identificateur contient une caractéristique du centre de distribution d'origine.

4. Procédé selon la revendication 1, dans lequel des données, qui sont déterminées aux centres de distribution et qui caractérisent les envois postaux, sont transmises par des moyens électroniques, sous le numéro de référence associé, des centres de distribution au centre de distribution d'origine respectif.

5. Procédé selon la revendication 1, dans lequel des premières informations électroniques, qui sont relatives à des envois postaux auxquels on s'attend et qui contiennent au moins le numéro de référence et les identificateurs des envois postaux attendus, sont transmises des centres de distribution à chacun des centres de distribution en aval auxquels les envois postaux sont expédiés.

6. Procédé selon la revendication 5, dans lequel les premières informations contiennent en plus des données caractérisant les envois postaux telles que, entre autres, des adresses de destinataire.

7. Procédé selon la revendication 4, dans lequel les numéros de référence des envois postaux sont déterminés à partir des identificateurs lus dans les autres centres de distribution ou les centres de distribution de destination.

8. Procédé selon l'une des revendications 1 à 3, dans lequel on place l'identificateur de façons codée et non codée sur les envois postaux, on lit tout d'abord l'identificateur codé et, si celui-ci est indéchiffrable, on lit l'identificateur non codé.

9. Procédé selon l'une des revendications 1 à 3, dans lequel, lorsque que les domaines de validité des identificateurs sont dépassés, les envois postaux sont dotés de nouveaux identificateurs valides.

10. Procédé selon la revendication 1, dans lequel les numéros de référence des envois postaux sont déterminés dans les autres centres de distribution ou centres de distribution de destination en détectant les caractéristiques dès envois postaux et en analysant les ensembles de données du centre de distribution d'origine, comportant les numéros de référence selon les données détectées.

11. Procédé selon la revendication 6, dans lequel les numéros de référence des envois postaux sont déterminés dans les autres centres de distribution ou centres de distribution de destination en détectant les caractéristiques des envois postaux et en analysant les premières informations électroniques comportant les numéros de référence selon les données caractéristiques détectées.

12. Procédé selon l'une des revendications 1 à 11, dans lequel, en ce qui concerne les envois de colis dans lesquels plusieurs envois sont transportés conjointement à une adresse de destination déterminée, l'ensemble de données de chaque envoi du colis contient également les numéros de référence des envois voisins, l'ensemble de données des derniers envois postaux étant **caractérisé en** tant que tel.

13. Procédé selon la revendication 1, dans lequel un repère d'identification par fréquence radio est appliqué sur l'envoi postal pour identifier l'envoi postal.
